# EUROPÄISCHE PATENTSCHRIFT

(11) **EP 1 272 414 B1**
(45) Veröffentlichungstag und Bekanntmachung des Hinweises auf die Patenterteilung: **30.06.2004**
(21) Anmeldenummer: 01907381.6
(22) Anmeldetag: 16.01.2001
(51) Int. Cl.: B65G 63/00

(54) **UMSCHLAGANLAGE IN EINEM SEE- ODER BINNENHAFEN**
LOADING AND UNLOADING PLANT IN A SEA OR RIVER PORT
INSTALLATION DE TRANSBORDEMENT DANS UN PORT MARITIME OU FLUVIAL

(30) Priorität: 19.01.2000 DE 10002915
(43) Veröffentlichungstag der Anmeldung: 08.01.2003
(73) Patentinhaber: Gottwald Port Technology GmbH, 40597 Düsseldorf (DE)
(72) Erfinder: DOBNER, Mathias, 41569 Rommerskirchen (DE); FRANZEN, Hermann, 41238 Mönchengladbach (DE); KRÖLL, Joachim, 41363 Jüchen (DE); POHLMANN, Gerlinde, 52064 Aachen (DE)
(74) Vertreter: Moser, Jörg Michael, Dipl.-Ing.
(86) Internationale Anmeldenummer: PCT/DE2001/000234
(87) Internationale Veröffentlichungsnummer: WO 2001/053175

(56) Entgegenhaltungen:
- DE-A- 3 421 418

## Beschreibung

Die Erfindung betrifft eine Umschlaganlage in einem See- oder Binnenhafen, insbesondere für ISO-Container, mit einem entlang eines Kais angeordneten, aus einzelnen zeilenartigen Lagermodulen bestehendem Container-Lager und mindestens einer mit den Lagermodulen zusammenwirkenden Ladeanlage für den Lastumschlag von und zu einem am Kai liegendem Schiff

Für den Umschlag von ISO-Containem zwischen verschiedenartigen Transportmitteln, beispielsweise Schiff, Bahn oder LKW werden Ladeanlagen eingesetzt, die einen weitestgehend störungsfreien Stückgutumschlag bei hohen Durchsatzzahlen gewährleisten müssen. Zentraler Bestandteil einer Container-Umschlaganlage ist meist ein Containerlager, das die Stückgutströme entkoppelt und somit die bedarfsgerechte Bedienung der verschiedenartigen Transportmittel sicherstellt. Die aufkommens- und bedarfsgerechte Bedienung der verschiedenartigen Transportmittel erfordert eine optimierte Konzeptionierung der gesamten Umschlaganlage.

Aus der DE 44 39 740 C1 ist eine gattungsgemäße Umschlaganlage für Schiff-, Bahnund LKW-Transport bekannt. Zentraler Bestandteil dieser Umschlaganlage ist ein Containerlager, das aus mehreren einzelnen zeilenartigen Lagermodulen besteht, in denen je ein Stapelkran zur Ein- und Auslagerung zum Einsatz kommt. Zwischen Schiff und Lager operieren Containerbrücken, die mit dem Lager über sich auf Fahrbahnen bewegenden Transportmitteln in Verbindung stehen. Weiterhin erfolgt der Umschlag zu flurgebundenen Transportmitteln, wie LKW und Bahn. Während der seeseitige Umschlagprozess zwischen Schiff und Lager weitestgehend automatisiert und dementsprechend schnell gestaltbar ist, ist zur Anpassung daran, d. h. zur Gewährleistung eines insgesamt ausgeglichenen Stückgutflusses, der Umschlag zwischen dem Lager und den landseitigen flurgebundenen Transportmitteln nur unter erhöhtem Aufwand seitens der hier eingesetzten Ladeanlagen zu bewerkstelligen. Ein Grund dafür ist, dass dieser Umschlagprozess wegen der manuell geführten flurgebundenen Transportmittel nur begrenzt automatisierbar ist, wobei einschlägige Sicherheitsrichtlinien zu beachten sind, die mit einer möglichst schnellen Abwicklung des Umschlags im Zielkonflikt stehen.

Vollautomatische Containerterminals, die mit fahrerlosen Transportfahrzeugen (AGVs) zum Horizontaltransport zusammenwirken sind zwar bekannt, doch handelt es sich dabei stets um sehr große Anlagen in großen Seehäfen, die nur wirtschaftlich zu betreiben sind, wenn ein extrem großer Stückgutdurchsatz erreicht wird. Kleinere Terminals sind aus Gründen der Wirtschaftlichkeit deshalb bisher lediglich teilautomatisiert, obgleich auch hier der Wunsch besteht, durch automatisierte Transportabläufe Kosten zu sparen oder Leistungen zu erhöhen.

Ausgehend von einer vorstehend beschriebenen Umschlaganlage besteht die Aufgabe der vorliegenden Erfindung darin ein äußerst kompaktes Containerterminal zu schaffen, das auch den Betreiber kleiner Umschlaganlagen in die Lage versetzt, sein Containerlager zu automatisieren. Dabei sollen die Umschlagkosten gesenkt und die Investitions- und Instandhaltungskosten niedrig gehalten werden.

Zur Lösung der Aufgabe wird erfindungsgemäß eine Ladeanlage für den Lastumschlag vorgeschlagen, die aus mindestens einem Hafenmobilkran besteht, dessen Lastausleger in den Bereich mindestens eines innerhalb des aus einer Anzahl von Lagermodulen mit einer von der Modulbreite abhängigen Anzahl von Containerreihen bestehenden Containerlagers vorgesehenen, eine Schnittstelle zwischen dem Hafenmobilkran und den Lagermodulen des Containerlagers bildenden Übergabeplatzes reicht.

In dieser neuartigen Umschlaganlage entfällt der bei herkömmlichen automatisierten Anlagen vorgesehene Horizontaltransport zwischen Schiff und Containerlager, der gewöhnlich mit manuellen oder automatisierten Transportfahrzeugen bewerkstelligt wurde. Der Wegfall dieser Fahrzeuge und damit die nicht mehr erforderlichen Fahrbahnen am Kai zwischen Containerlager und Schiff ermöglichen den Einsatz von Hafenmobilkranen anstatt aufwendiger weit ausladender Containerbrücken. Somit lassen sich die Investitionskosten gegenüber mit Containerbrücken arbeitenden Anlagen um ca. 40 % reduzieren. Die Hafenmobilkrane sind leicht verfahrbar und auch in anderen Kaibereichen universal einsetzbar.

Die zwischen dem zu entladendem Schiff und dem Containerlager verschwenkbaren Ausleger der Hafenkrane nehmen den Container auf und setzen ihn auf einem dem Containerlager zugeordneten Übergabeplatz ab, der zum besseren Positionieren erfindungsgemäß mit Zentrierungen und Führungen für die Container versehen ist.

Nach einem weiteren Merkmal der Erfindung ist vorgesehen, dass jedes von mehreren Lagermodulen des Containerlagers quer zum Kai verläuft und vorzugsweise neun Container breit und drei bis vier Container hoch ist.

Erfindungsgemäß übernimmt je Lagermodul mindestens ein durch eine übergeordnete Lagerlogistik überwachter und gesteuerter Stapelkran die Übernahme. den Horizontaltransport und das Stapeln der Container. Der Stapelkran ergreift den vom Hafenmobilkran abgesetzten Container an dem jeweiligen Übergabeplatz im Containerlager, der die Schnittstelle zwischen dem Hafenmobilkran und dem Stapelkran bildet.

Der Stapelkran selbst ist konventionell als aufgeständerter Brückenkran mit einer Laufkatze ausgebildet und überspannt in bekannter Weise jeweils ein Lagermodul des Containerlagers.

In einer Weiterbildung der Erfindung ist vorgesehen, das Containerlager entsprechend der Lagercharakteristik in mindestens zwei Bereiche, vorzugsweise parallel zum Kai mittig zum Containerlager aufzuteilen. Die beiden Bereiche können beispielsweise ein Import und ein Exportbereich sein, die Stapelkrane überfahren vorzugsweise beide Bereiche.

Des weiteren wird vorgeschlagen, dass mindestens zwei auf quer zu den einzelnen Lagermodulen in unterschiedlichen horizontalen Ebenen verlaufenden Schienenfahrbahnen verfahrbare und unabhängig voneinander agierende Quertransporter die Lagermodule miteinander verknüpfen und den Horizontaltransport der Container zwischen den beiden Lagerbereichen übernehmen, wobei die Quertransporter durch die übergeordnete Lagerlogistik überwacht und gesteuert sind. Auf diese Weise können die in den Lagermodulen operierenden vollautomatischen Stapelkrane die Container von den Übergabeplätzen entweder direkt in die zugehörigen Lagermodule oder zu einem dieser beiden Quertransporter transportieren. Die Quertransporter steuern entweder ein anderes Lagermodul oder einen der beiden Ausschleusepunkte an, die erfindungsgemäß dadurch gebildet werden, dass die Schienenfahrbahnen der Quertransporter auf mindestens einer Längsseite des Lagers zum Ein- und Ausschleusen von Containern über die außen liegenden Module hinaus bis in den Bereich einer vorzugsweise mehrspurigen Zufahrtsstrasse verlängert sind.

Sofern das Aus- und Einschleusen von Containern von und zu LKWs erfolgt ist vorgesehen, unterhalb der Schienenfahrbahnverlängerung ein Entladeareal für LKW's zu bilden, das durch einen auf einer kurzen Schienenfahrbahn aufgeständerten Brückenkran bedienbar ist.

Erfindungsgemäß erfolgt die Bedienung des LKW-Ladekrans funkferngesteuert durch den sogenannten Checker oder Operator vom Gate Office aus, das im gesicherten Bereich zwischen Zufahrts- und Abfahrtsstrasse in einer optimalen Sichtposition angeordnet ist.

Nach einem weiteren Merkmal der Erfindung ist vorgesehen, dass an einem Ende der Schienenlaufbahn der beiden Quertransporter neben der vorzugsweise zweispurigen Abfahrtstrasse Reachstacker und andere spezielle Umschlaggeräte Zugriff auf Leercontainer haben und das benachbarte Leercontainerlager in das Container-Terminal einbinden. Auf diese Weise wird es sehr einfach möglich, die Leercontainer in das System ein- und auszuschleusen, und zwar an der Stelle, an der auch das Beund Entladen der LKWs erfolgt, aber auch an der davon entgegengesetzten Seite des Containerlagers am anderen Ende der Schienenlaufbahn.

Nach einem weiteren Merkmal der Erfindung können zum Ein- und Ausschleusen der für den Bahnumschlag vorgesehenen Container und für deren Horizontaltransport zwischen Lager und Bahn Reachstacker eingesetzt werden, die auch den Bereitstellungsbereich an der Bahnseite bedienen.

Die Vorteile der Erfindung sind insbesondere darin zu sehen, dass die erfindungsgemäße Umschlaganlage auch die Betreiber kleiner Umschlagterminals in die Lage versetzt, das Containerlager zu automatisieren. Die Kosten für Investitionen und Instandhaltung sind im Vergleich zu konventionellen, mit Straddlecarrier oder Reachstacker betriebenen Containerlagern um 30 bis 40 % niedriger anzusetzen. Die reduzierten Umschlagkosten (DM pro Container) verbunden mit anderen Vorteilen eines automatisierten Containerlagers, wie geringe Wartezeiten, sichere Be- und Entladung, 100 %ige Zugriffsgenauigkeit, bringen Betreiber von Kompakt-Terminals in diesem Dienstleistungsbereich in eine starke, konkurrenzfähige Position. Da als Umschlaggerät leicht verfahrbare Hafenmobilkrane eingesetzt werden, die auch in anderen Kranbereichen universell arbeiten können, benötigt man nur ca. 60 % der Investitionskosten einer entsprechenden Containerbrücke.

Ein Ausführungsbeispiel der Erfindung ist in der Zeichnung dargestellt und wird nachfolgend beschrieben. Es zeigt:
- Fig. 1: die Draufsicht auf das erfindungsgemäße Containerterminal,
- Fig. 2 und 3: Seitenansichten des Terminals nach Figur 1,
- Fig. 4: eine Detailansicht des Terminals von der Wasserseite in Richtung Lager, und

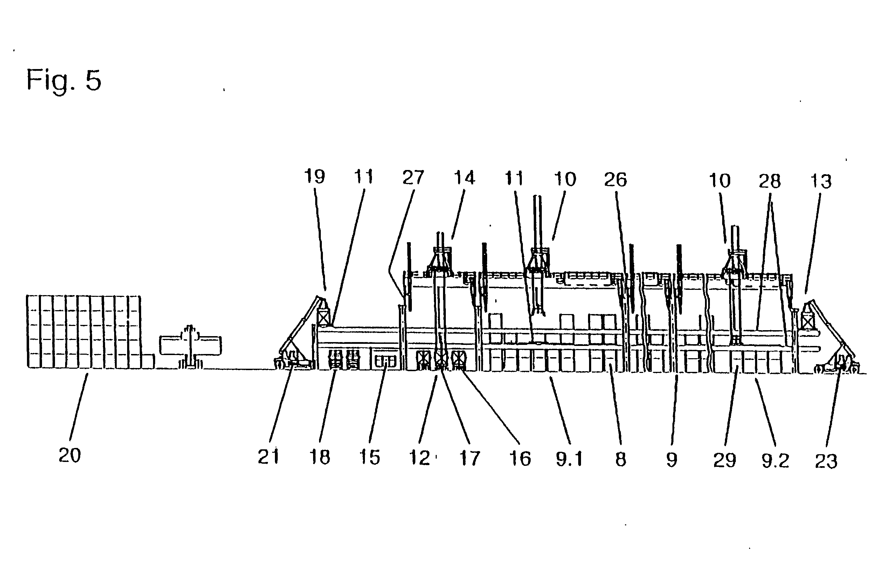

- Fig. 5: einen Schnitt durch das Terminal im Bereich der LKW-Abfertigung.

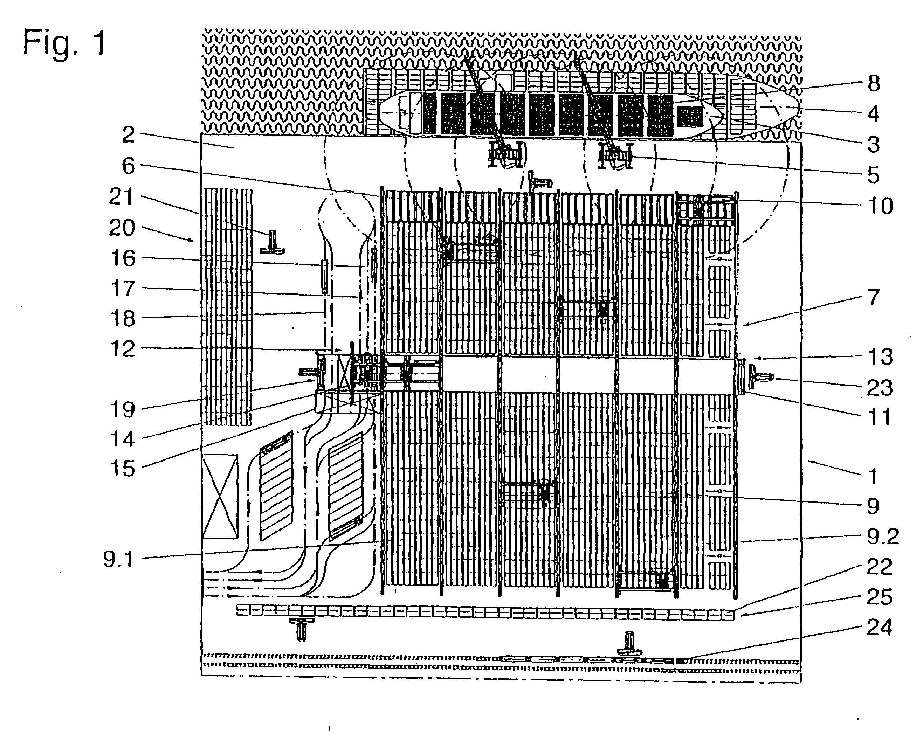

In Figur 1 ist in einer Draufsicht auf das erfindungsgemäße kompakte Containerterminal 1 ein am Kai 2 liegendes Containerschiff 3 bzw.4 zu erkennen. Zum Be- und Entladen des Containerschiffs 3 bzw. 4 sind zwei Hafenmobilkrane 5 vorgesehen, die am Kai 2 verfahrbar sind. An der dem Kai zugewandten Längsseite des Containerlagers befinden sich vorzugsweise sechs Übergabeplätze 6, die die Schnittstelle zum Containerlager 7 bilden. Überwacht von einer entsprechenden Ladeund Lagerlogistik werden die Container 8 jeweils auf einen der Übergabeplätze abgesetzt, wobei jeder Übergabeplatz einem der Lagermodule 9, 9.1 oder 9.2 zugeordnet ist.

Die in den Lagermodulen 9, 9.1 oder 9.2 operierenden vollautomatischen Stapelkrane 10 transportieren die Container 8 von den Übergabeplätzen 6 entweder direkt in die zugehörigen Lagermodule oder zu einem der beiden Quertransporter 11. Die Quertransporter 11 steuern ein anderes Lagermodul oder einen der beiden Ausschleusepunkte an, nämlich den Ausschleusepunkt für die LKW-Abfertigung 12 oder den Ausschleusepunkt für die Bahnabfertigung 13.

Den Containerumschlag an der LKW-Abfertigung 12 übernimmt der LKW-Ladekran 14, der manuell von dem Gate Office 15 heraus gesteuert wird. Der LKW-Ladekran 14 bedient die LKW's 16, die auf der dreispurigen Zufahrtsstrasse 17 der LKW-Abfertigung 12 zugeleitet und auf der zweispurigen Ausfahrtstrasse 18 herausgeführt werden. Über den Ausschleusepunkt für die LKW-Abfertigung 12 hinaus ist durch den Ausschleusepunkt für die Leercontainer 19 auch das Leercontainerlager 20 im Kompakt-Container-Terminal 1 integriert. Die Bedienung des Leercontainerlagers erfolgt manuell mittels Reachstacker 21 oder anderer spezieller Stapelgeräte für die Leercontainer. Die Container 22, die für den Bahnumschlag bestimmt sind, werden manuell mittels Reachstacker 23 vom Ausschleusepunkt für die Bahnabfertigung 13 entweder direkt zur Bahn 24 oder in den Bereitstellungsbereich 25 transportiert.

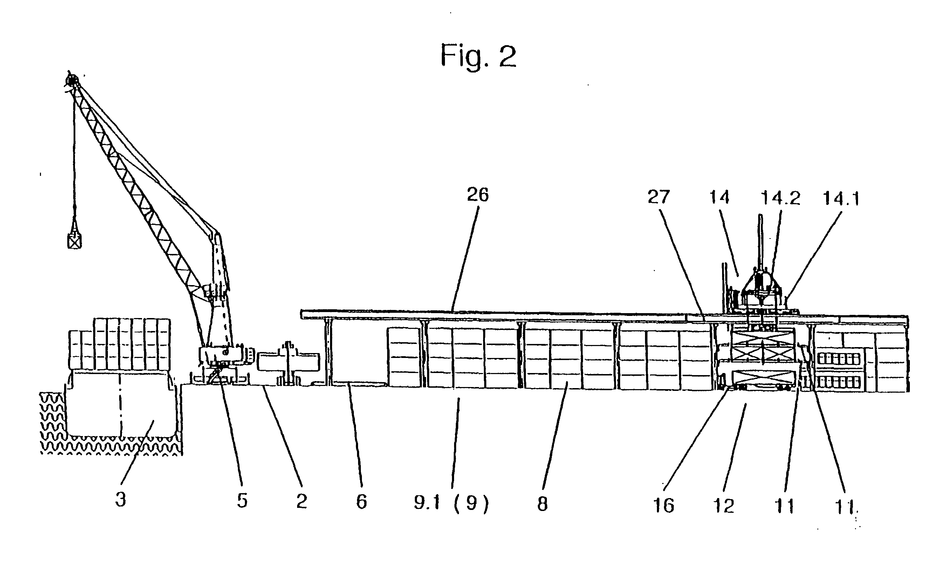

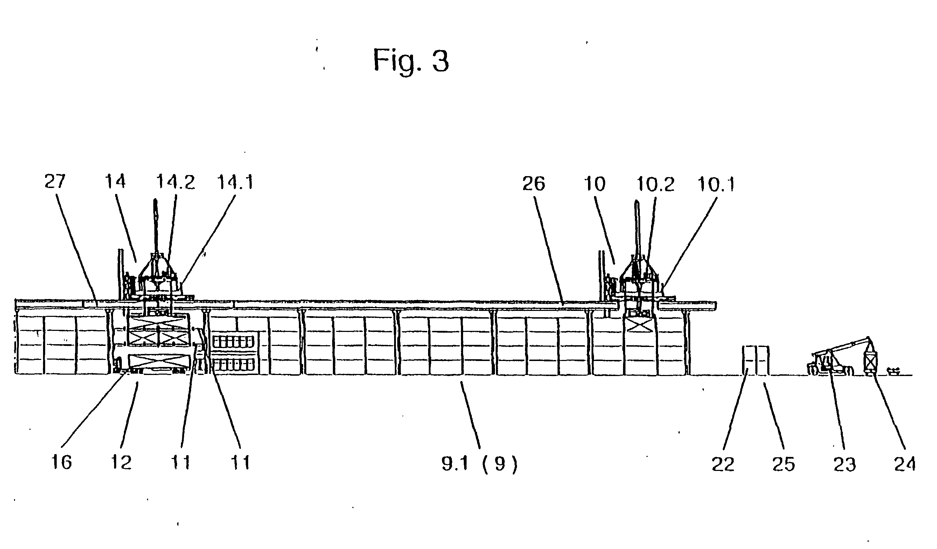

Die Figuren 2 und 3 zeigen jeweils eine Hälfte der Seitenansicht des erfindungsgemäßen Containerterminals 1. In Figur 2 ist auf der linken Seite das an einem Kai 2 liegende Containerschiff 3 zu erkennen, sowie der Hafenmobilkran 5 beim Entladevorgang. Des weiteren erkennt man den Übergabeplatz 6, die Container 8, das Lagermodul 9.1, den Stapelkran 10, die beiden Quertransporter 11, den LKW-Ladekran 14 und einen LKW 16.

Der Stapelkran 10 besteht aus der Brücke 10.1 und der Katze 10.2. Er bewegt sich auf einer aufgeständerten Kranbahn 26, die über die gesamte Länge des Lagermoduls 9.1 verläuft. Der Ladekran 14 besteht aus der Brücke 14.1 und der Katze 14.2. Er bewegt sich auf einer kurzen aufgeständerten Kranbahn 27, die nur im Bereich der LKW-Abfertigung 12 verläuft.

Die Container 22, die für den Bahnumschlag bestimmt sind, werden, wie in der rechten Hälfte der Figur 3 erkennbar, manuell mittels Reachstacker 23 vom Ausschleusepunkt für die Bahnabfertigung entweder direkt zur Bahn 24 oder in den Bereitstellungsbereich 25 transportiert.

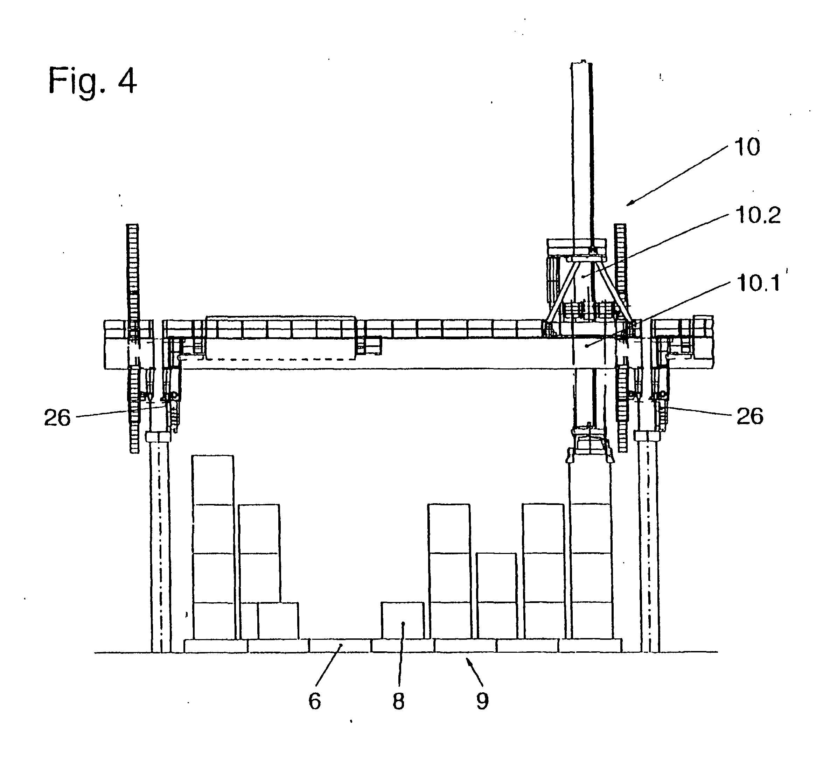

Figur 4 zeigt eine Detailansicht von der Wasserseite aus in Richtung Lager gesehen. Dargestellt ist als Ausschnitt aus dem Containerlager die Frontansicht eines Lagermoduls 9 mit seinen Übergabeplätzen 6, den Containern 8, dem Stapelkran 10, bestehend aus der Brücke 10.1 und der Katze 10.2. und der aufgeständerten Kranbahn 26.

Die Zeichnungsfigur 5 zeigt einen Schnitt durch das Containerlager im Bereich der LKW-Abfertigung 12. Erkennbar sind insbesondere die äußeren Lagermodule 9.1 und 9.2. An den Bereich der LKW-Abfertigung 12 grenzt das Lagermodul 9.1 an. Man erkennt die Container 8, den Stapelkran 10, die Quertransporter 11, den LKW-Ladekran 14, das Gate Office 15, die LKW's 16, die dreispurige Zufahrtstrasse 17, die zweispurige Abfahrtstrasse 18, den Ausschleusepunkt für die Leercontainer 19, das Leercontainerlager 20 und den Reachstacker 21 für die Leercontainer.

Der LKW-Ladekran 14 bewegt sich auf der kurzen, aufgeständerten Kranbahn 27. Die beiden auf den Schienenlaufbahnen 28 geführten Quertransporter 11 übernehmen den Horizontaltransport des Containers 8. Die gegenüberliegende längsseitige Grenze des Containerlagers bildet das Lagermodul 9.2. In diesem Lagermodul ist die Hälfte der Stellplätze Kühlcontainern 29 vorbehalten. Des weiteren erkennt man den Ausschleusepunkt für die Bahnabfertigung 13 und den Reachstacker 23 zur Bahnbeladung.

### Ein Entladevorgang eines Containerschiffes 3 bzw.4 könnte wie folgt ablaufen:

Der Hafenmobilkran 5 übernimmt aus dem Containerschiff 3 einen Container und stellt ihn nach Verschwenken des Auslegers auf einen der Übergabeplätze 6 des erfindungsgemäßen Containerlagers ab. Einer der automatischen Stapelkrane 10 übernimmt den Container und transportiert ihn entweder zu einem der dahinterliegenden Lagermodule oder zu einem der beiden Quertransporter 11. Der Quertransporter 11 ermöglicht das Umsetzen der Container in einen der anderen Lagermodule 9, 9.1 und 9.2 oder den Transport des Containers in den Bereich der LKW-Abfertigung 12 bzw der Bahnabfertigung 13 . Im Bereich der LKW-Abfertigung 12 wird der Container 8 von dem LKW-Ladekran 14 übernommen, der auf der aufgeständerten Kranwand 27 verfährt. Im Bereich der LKW-Abfertigung 12 unterhalb des LKW-Ladekrans 14 sind drei Fahrspuren 17 für die LKWs 16 vorgesehen; auf die LKW's werden die Container abgesetzt. Die LKWs 16 werden in einer Wendeschleife auf die zweispurige Ausfahrtstrasse geführt, über die sie das Containerterminal verlassen. Leercontainer 19 werden mit Hilfe des Reachstackers 21 zwischen dem Leercontainerlager 20 und dem Quertransporter 11 transportiert. Ebenfalls mit Reachstacker 23 werden Container 8 am Ausschleusepunkt 13 für die Bahnabfertigung auf der der LKW-Abfertigung gegenüberliegenden Seite des Containerlagers übernommen.

## Patentansprüche

1. , Umschlaganlage in einem See- oder Binnenhafen, insbesondere für ISO-Container, mit einem entlang eines Kais angeordneten, aus einzelnen zeilenartigen Lagermodulen bestehendem Container-Lager und mindestens einer mit den Lagermodulen zusammenwirkenden Ladeanlage für den Lastumschlag von und zu einem am Kai liegendem Schiff,
**dadurch gekennzeichnet,**
**dass** die Ladeanlage für den Lastumschlag aus mindestens einem Hafenmobilkran (5) besteht, dessen Lastausleger in den Bereich mindestens eines innerhalb des aus einer Anzahl von Lagermodulen (9,9.1,9.2) mit einer von der Modulbreite abhängigen Anzahl von Containerreihen bestehenden Containerlagers (7) vorgesehenen, eine Schnittstelle zwischen dem Hafenmobilkran (5) und den Lagermodulen (9,9.1,9.2) des Containerlagers (7) bildenden Übergabeplatzes (6) reicht.

2. Umschlaganlage nach Anspruch 1,
**dadurch gekennzeichnet,**
**dass** jeder Übergabeplatz (6) mit Zentrierungen und Führungen für die Container (8) versehen ist

3. Umschlaganlage nach Anspruch 1 und 2,
**dadurch gekennzeichnet.**
**dass** jeder Lagermodul (9,9.1,9.2) des Containerlagers (7) quer zum Kai (2) verläuft und vorzugsweise neun Container (8) breit und drei bis vier Container (8) hoch ist.

4. Umschlaganlage nach Anspruch 1 bis 3,
**dadurch gekennzeichnet,**
**dass** je Lagermodul (9, 9.1, 9.2) mindestens ein durch eine übergeordnete Lagerlogistik überwachter und gesteuerter Stapelkran (10) die Übernahme, den Horizontaltransport und das Stapeln der Container (8) übernimmt.

5. Umschlaganlage nach Anspruch 4,
**dadurch gekennzeichnet,**
**dass** der Stapelkran (10) als aufgeständerter Brückenkran (10.1) mit einer Katze (10.2) ausgebildet ist.

6. Umschlaganlage nach Anspruch 1 bis 5,
**dadurch gekennzeichnet,**
**dass** das Containerlager (7) entsprechend der Lagercharakteristik in mindestens zwei Bereiche, vorzugsweise parallel zum Kai (2) und mittig zum Containerlager (7), aufgeteilt ist.

7. Umschlaganlage nach Anspruch 1 bis 6,
**dadurch gekennzeichnet,**
**dass** mindestens zwei auf quer zu den einzelnen Lagermodule (9,9.1,9.2) in unterschiedlichen horizontalen Ebenen verlaufenden Schienenfahrbahnen (28) verfahrbare und unabhängig voneinander agierende Quertransporter (11) die Lagermodule (9,9. 1,9.2) miteinander verknüpfen und den Horizontaltransport der Container (8) zwischen den beiden Lagerbereichen übernehmen, wobei die Quertransporter (11) durch die übergeordnete Lagerlogistik überwacht und gesteuert sind.

8. Umschlaganlage nach Anspruch 1 bis 7,
**dadurch gekennzeichnet,**
**dass** die Schienenfahrbahnen (28) der Quertransporter (11) auf mindestens einer Längsseite des Lagers zum Ein- und Ausschleusen von Containern (8) über die außenliegenden Module (9.1, 9.2) hinaus bis in den Bereich einer vorzugsweise mehrspurigen Zufahrtsstraße (17) verlängert sind.

9. Umschlaganlage nach Anspruch 8,
**dadurch gekennzeichnet,**
**dass** unterhalb der Schienenfahrbahnverlängerung ein Entladeareal für LKWs (12) gebildet wird, das durch einen auf einer kurzen Schienenfahrbahn (27) aufgeständerten LKW-Ladekran (14) bedienbar ist.

10. Umschlaganlage nach Anspruch 8 und 9,
**dadurch gekennzeichnet,**
**dass** die Bedienung des LKW-Ladekrans (14) funkferngesteuert durch den Checker oder Operator vom Gateoffice (15) erfolgt, das im gesicherten Bereich zwischen Zufahrts- (17) und Abfahrtsstraße (18) in einer optimalen Sichtposition angeordnet ist.

11. Umschlaganlage nach Anspruch 1 bis 10,
**dadurch gekennzeichnet,**
**dass** an einem Ende der Schienenlaufbahn (28) der beiden Quertransporter (11) neben der vorzugsweise zweispurigen Abfahrtsstraße (18) Reachstacker (21) oder andere spezielle Umschlaggeräte Zugriff auf Leercontainer haben und das benachbarte Leercontainerlager (20) in das Container-Terminal (1) einbinden.

12. Umschlaganlage nach Anspruch 11,
**dadurch gekennzeichnet,**
**dass** die Leercontainer an mindestens einem Ende der Schienenlaufbahn der beiden Quertransporter (11) ein- und ausgeschleust (19) werden.

13. Umschlaganlage nach Anspruch 1 bis 12,
**dadurch gekennzeichnet,**
**dass** zum Ein- und Ausschleusen der für den Bahnumschlag vorgesehenen Container (22) und deren Horizontaltransport zwischen Containerlager (7) und Bahn (24) Reachstacker (23) eingesetzt werden, die auch den Bereitstellungsbereich (25) an der Bahnseite bedienen.

## Claims

1. Transloading plant in a sea or river port, in particular for ISO containers, having a container store disposed along a quay and consisting of individual linear storage modules, and having at least one loading plant co-operating with the storage modules for transloading from and to a ship lying at the quayside,
**characterised in that**
the loading plant consists of at least one mobile harbour crane (5) for transloading purposes, the load-bearing boom of which extends into the region of at least one transfer location (6) which is provided inside the container store (7) consisting of a number of storage modules (9, 9.1, 9.2) with a module width-dependent number of container rows, and which transfer location forms an interface between the mobile harbour crane (5) and the storage modules (9, 9.1, 9.2) of the container store (7).

2. Transloading plant as claimed in claim 1,
**characterised in that**
each transfer location (6) is provided with centring means and guide means for the container (8).

3. Transloading plant as claimed in claim 1 and 2,
**characterised in that**
each storage module (9, 9.1, 9.2) of the container store (7) extends transverse to the quay (2) and is preferably nine containers (8) wide and three to four containers (8) high.

4. Transloading plant as claimed in claim 1 to 3,
**characterised in that**
at least one stacking crane (10), which is monitored and controlled by superordinate storage logistics, per storage module (9, 9.1, 9.2) assumes the take-over, the horizontal transportation and the stacking of the containers (8).

5. Transloading plant as claimed in claim 4,
**characterised in that**
the stacking crane (10) is formed as an overhead bridge crane (10.1) with a trolley (10.2).

6. Transloading plant as claimed in claim 1 to 5,
**characterised in that**
the container store (7) is divided, in accordance with storage characteristics, into at least two areas, preferably in parallel with the quay (2) and centrally with respect to the container store (7).

7. Transloading plant as claimed in claim 1 to 6,
**characterised in that**
at least two transverse transporters (11), which can travel on rail tracks (28) extending transverse to the individual storage modules (9, 9.1, 9.2) in different horizontal planes and which act independently of each other, couple the storage modules (9, 9.1, 9.2) to each other and take over the horizontal transportation of the containers (8) between the two storage areas, wherein the transverse transporters (11) are monitored and controlled by the superordinate storage logistics.

8. Transloading plant as claimed in claim 1 to 7,
**characterised in that**
the rail tracks (28) of the transverse transporters (11) are extended on at least one long side of the store for the inward and outward transfer of containers (8) beyond the outermost modules (9, 9.1, 9.2) into the region of a preferably multi-lane entry road (17).

9. Transloading plant as claimed in claim 8,
**characterised in that**
an unloading area for lorries (12) is formed underneath the rail track extension, which unloading area can be served by means of a lorry loading crane (14) overhead-mounted on a short rail track (27).

10. Transloading plant as claimed in claim 8 and 9,
**characterised in that**
the lorry loading crane (14) is served by radio remote control by the checker or operator working from the gate office (15) which is disposed in the secured region between the entry road (17) and exit road (18) in an optimal viewing position.

11. Transloading plant as claimed in claim 1 to 10,
**characterised in that**
at one end of the rail track (28) of the two transverse transporters (11) next to the preferably two-lane exit road (18), reach stackers (21) or other special transloading apparatus have access to empty containers and incorporate the adjacent empty container store (20) into the container terminal (1).

12. Transloading plant as claimed in claim 11,
**characterised in that**
the inward and outward transfer (19) of the empty containers takes place at at least one end of the rail track of the two transverse transporters (11).

13. Transloading plant as claimed in claim 1 to 12,
**characterised in that**
reach stackers (23) can be used for the inward and outward transfer of the containers (22) provided for railway transloading and for the horizontal transportation thereof between the container store (7) and railway (24), these reach stackers also serve the pick-up area (25) on the railway side.

## Revendications

1. Installation de transbordement dans un port maritime ou fluvial, en particulier pour conteneurs ISO, comportant
un site d'entreposage de conteneurs situé le long d'un quai et constitué de modules d'entreposage individuels agencés en ligne et
au moins une installation de chargement coopérant avec les modules d'entreposage en vue du transbordement de charges vers et depuis le navire à quai, **caractérisée en ce que** l'installation de chargement destinée au transbordement de charges est constituée d'au moins une grue portuaire mobile (5) dont la flèche pénètre dans la région d'au moins un site de transbordement (6)
- qui est prévu à l'intérieur du site d'entreposage de conteneurs (7) comprenant un certain nombre de modules d'entreposage (9, 9.1, 9.2) comportant un nombre de rangées de conteneurs fonction de la largeur des modules, et
qui forme une interface entre la grue portuaire mobile (5) et les modules d'entreposage (9, 9.1, 9.2) du site d'entreposage de conteneurs (7).

2. Installation de transbordement selon la revendication 1, **caractérisée en ce que** chaque site de transbordement (6) est doté de dispositifs de centrage et de guidage des conteneurs (8).

3. Installation de transbordement selon la revendication 1 et 2, **caractérisée en ce que** chaque module d'entreposage (9, 9.1, 9.2) du site d'entreposage de conteneurs (7) s'étend transversalement au quai (2) et a avantageusement la largeur de neuf conteneurs (8) et la hauteur de trois ou quatre conteneurs (8).

4. Installation de transbordement selon les revendications 1 à 3, **caractérisée en ce que**, pour chaque module d'entreposage (9, 9.1, 9.2), une grue empileuse (10) contrôlée et commandée par une logistique d'entreposage centrale prend en charge la réception, le transport horizontal et l'empilage des conteneurs (8).

5. Installation de transbordement selon la revendication 4, **caractérisée en ce que** la grue d'empilage (10) est conformée en pont roulant surélevé (10.1) comportant un treuil roulant (10.2).

6. Installation de transbordement selon la revendication 1 à 5, **caractérisée en ce que** le site d'entreposage de conteneurs (7) est divisé en fonction de la caractéristique d'entreposage en au moins deux zones, avantageusement agencées parallèlement au quai (2) et au milieu du site d'entreposage de conteneurs (7).

7. Installation de transbordement selon les revendications 1 à 6, **caractérisée en ce que** au moins deux transporteurs transversaux (11), qui sont mobiles sur des voies de circulation sur rails (28) s'étendant transversalement aux modules d'entreposage individuels (9, 9.1, 9.2) dans différents plans horizontaux et qui fonctionnent indépendamment l'un de l'autre, associent les modules d'entreposage (9, 9.1, 9.2) entre eux et prennent en charge le transport horizontal des conteneurs (8) entre les deux zones d'entreposage, les transporteurs transversaux (11) étant contrôlés et commandés par la logistique d'entreposage central.

8. Installation de transbordement selon les revendications 1 à 7, **caractérisée en ce que** les voies de circulation sur rails (28) des transporteurs transversaux (11) sont prolongées jusque dans la zone d'une route d'amenée (17), avantageusement à voies multiples, sur au moins un côté longitudinal du site d'entreposage en vue d'introduire et d'extraire les conteneurs (8) en les faisant passer par-dessus les modules extérieurs (9, 9.1, 9.2).

9. Installation de transbordement selon la revendication 8, **caractérisée en ce qu'**une zone de déchargement de camions (12) est ménagée au-dessous du prolongement des voies de circulation sur rails, laquelle zone peut être utilisée par une grue de chargement de camion (14) montée en surélévation sur une coutre voie de circulation sur rails (27).

10. Installation de transbordement selon les revendications 8 et 9, **caractérisée en ce que** le maniement de la grue de chargement de camion (14) est effectué de façon télécommandée par l'opérateur ou le contrôleur depuis le poste d'entrée (15) qui est situé dans une position d'observation optimale dans la zone sécurisée entre une route d'amenée (17) et une route d'enlèvement (18).

11. Installation de transbordement selon les revendications 1 à 10, **caractérisée en ce que**, à une extrémité de la voie de circulation sur rails (28) des deux transporteurs transversaux (11) à côté de la route d'enlèvement (18) avantageusement à deux voies, des empileurs-élévateurs (21) ou d'autres appareils de transbordement spéciaux ont accès aux conteneurs vides et le site d'entreposage de conteneurs vides (20) est intégré au terminal de conteneurs (1).

12. Installation de transbordement selon la revendication 11, **caractérisée en ce que** les conteneurs vides sont introduits et extraits (19) au moins à une extrémité de la voie de circulation sur rails des deux transporteurs transversaux (11).

13. Installation de transbordement selon les revendications 1 à 12, **caractérisée en ce que** des empileurs-élévateurs (23) sont utilisés pour l'introduction et l'extraction des conteneurs (22) prévus pour le transbordement et pour leur transport horizontal entre le site d'entreposage de conteneurs (7) et une voie (14), les empileurs-élévateurs utilisant également la zone d'approvisionnement (25) du côté de la voie.
